# EUROPÄISCHE PATENTSCHRIFT

(11) **EP 2 734 402 B1**
(45) Veröffentlichungstag und Bekanntmachung des Hinweises auf die Patenterteilung: **22.06.2016**
(21) Anmeldenummer: 13702448.5
(22) Anmeldetag: 01.02.2013
(51) Int. Cl.: B60L 11/18

(54) **SPULENEINHEIT UND ELEKTROFAHRZEUG**
COIL UNIT AND ELECTRIC VEHICLE
UNITÉ BOBINE ET VÉHICULE ÉLECTRIQUE

(30) Priorität: 17.04.2012 DE 102012103315
(43) Veröffentlichungstag der Anmeldung: 28.05.2014
(73) Patentinhaber: Conductix-Wampfler GmbH, 79576 Weil am Rhein (DE)
(72) Erfinder: WECHLIN, Mathias, 79400 Kandern (DE); ASSELIN, Pascal, 68400 Riedisheim (FR); GREEN, Andrew, 79429 Malsburg-Marzell (DE)
(74) Vertreter: Charrier, Rapp & Liebau
(86) Internationale Anmeldenummer: PCT/EP2013/052016
(87) Internationale Veröffentlichungsnummer: WO 2013/156169

(56) Entgegenhaltungen:
- DE-A1-102007 040 770
- DE-A1-102008 029 200
- DE-A1-102010 035 634

## Beschreibung

Die Erfindung betrifft eine Spuleneinheit nach Anspruch 1 und ein Elektrofahrzeug nach Anspruch 12.

Im Bereich der induktiven Energieübertragung zu beweglichen Verbrauchern, beispielsweise Elektro-Landfahrzeugen wie Automobilen oder Lastwagen, ist es bekannt, deren Fahrzeugbatterie über eine ortsfest installierte Primärspule einer Ladestation und eine am Fahrzeugboden angeordnete Sekundärspule zu laden. Dabei ist die Primärspule auf oder in der Fahrbahn angeordnet, beispielsweise auf öffentlich zugänglichen Parkplätzen, Ladebereichen von Tankstellen oder in der Garage des Fahrzeugbesitzers. Zum Laden wird das Elektrofahrzeug über die Primärspule gefahren, so dass die im Fahrzeug angeordnete Sekundärspule auf die Primärspule ausgerichtet ist.

Ein Beispiel hierfür offenbart die DE 10 2009 033 236 A1, bei der die Sekundärspule zusammen mit einer Ferritplatte als magnetische Flussführungseinheit in einem Gehäuse am Fahrzeugboden eines Elektrofahrzeugs angeordnet ist.

Die DE 10 2008 029 200 A1 offenbart eine Karosserie eines Kraftwagens mit wenigstens einem aus einem Plattenelement gebildeten Strukturbereich. Das Plattenelement ist auf dem Boden der Karosserie angeordnet und weist in Längsrichtung verlaufende, in Querrichtung der Kraftwagens nebeneinander angeordnete Längshohlkammer auf, in die Energiespeicherelemente, insbesondere Akkumulatoren, oder andere Bauelemente einer Energiespeichereinrichtung angeordnet sind. Um bei einem Unfall des Kraftwagens eine Beschädigung oder Zerstörung der Energiespeichereinrichtung mit daraus resultierender Gefährdung der Fahrzeuginsassen zu verringern, sind dort die Energiespeicherelemente beispielsweise nur in Bereichen angeordnet welche bei einem Unfall nicht übermäßig deformiert werden können, beispielsweise nur unter dem zentral angeordneten Fahrersitz. Hierdurch können nicht nur die Vorbaustruktur und Heckstruktur, sondern auch seitliche Bereiche der Fahrgastzelle zur Energieabsorption deformiert werden, während sich die Energiespeicherelemente nicht in diesen Bereichen befinden.

Die DE 10 2007 040 770 A1 offenbart einen Personenkraftwagen mit einem Fahrzeugboden mit einem sich in Fahrzeuglängsrichtung erstreckenden Mitteltunnel. Der Mitteltunnel weist wenigstens eine Schwachstelle auf, in deren Bereich sich der Mitteltunnel bei einer unfallbedingten Kraftbeaufschlagung nach Überschreiten einer Belastungsgrenze deformiert. Einen Hinweis auf eine Spuleneinheit mit einer Flussführungseinheit zur induktiven Übertragung elektrischer Energie zwischen der Spuleneinheit und einer ortsfesten Ladestation ist dort nicht offenbart.

Die DE 10 2010 035 634 A1 offenbart ein Übertragungssystem zum Laden der Traktionsbatterien eines Elektrofahrzeugs mit einer daran anfügbaren Ankoppelvorrichtung mit einem Transformatorteil, durch das elektrische Energie induktiv auf ein Transformatorteil am Fahrzeug übertragen werden kann. Das im Fahrzeugkennzeichen integrierte Transformatorteil weist einen Ankoppelkörper aus einem flexiblen Kunststoffmaterial auf, der eine elektrische Spulenanordnung mit einer aus voneinander getrennten plättchen- oder jochartigen Ferriten bestehende Ferritanordnung umgibt. Die voneinander getrennten Ferrite verschlechtern die magnetische Flussführung und somit Kopplung zwischen den Transformatorteilen.

Bei den bekannten Spuleneinheiten besteht der Nachteil, dass die magnetische Flussführungseinheit in der Regel aus einem massiven, starren und schweren Material besteht, beispielsweise einer Ferritplatte. Da die Spuleneinheit üblicherweise flächenparallel am Fahrzeugboden angeordnet ist und aufgrund ihres großen Gewichts eine große Trägheit aufweist, besteht bei einem Auffahrunfall die Gefahr, dass die Flussführungseinheit in Richtung der Aufprallstelle geschleudert wird und dabei die Spuleneinheit zerstört und ggf. aus ihrer Verankerung am Fahrzeugboden reist und das Fahrzeug beschädigt und die Fahrzeuginsassen wie auch außerhalb des Fahrzeugs befindlichen Personen gefährdet. Da die Flussführungseinheit in der Regel auch sehr starr ist, überträgt sie bei einem Aufprall die Aufprallenergie auch mehr oder weniger unvermindert.

Aufgabe der vorliegenden Erfindung ist es, die oben genannten Nachteile zu überwinden und eine eingangs genannte Spuleneinheit und Elektrofahrzeug bereitzustellen, welche den sicheren Einsatz der induktiven elektrischen Energieübertragung bei Elektrofahrzeugen, insbesondere bei Kraftfahrzeugen, ermöglichen.

Diese Aufgabe löst die Erfindung mit einer Spuleneinheit mit den Merkmalen des Anspruchs 1 und einem Elektrofahrzeug mit den Merkmalen des Anspruchs 12. Vorteilhafte Ausgestaltungen und zweckmäßige Weiterbildungen der Erfindung sind in den Unteransprüchen angegeben.

Eine eingangs genannte Spuleneinheit ist erfindungsgemäß dadurch gekennzeichnet, dass die Flussführungseinheit Materialschwächungen aufweist.

Bevorzugt können die Materialschwächungen im wesentlichen quer zur Längsrichtung des Fahrzeugs verlaufen, wobei dies geringe Abweichungen um wenige Zentimeter, bevorzugt um wenige Millimeter vom Verlauf genau quer zur Längsrichtung mit einschließt. Bevorzugt können die Materialschwächungen auch im wesentlichen konzentrisch zu einem Zentrum der Flussführungseinheit verlaufen. Weiter bevorzugt können die Materialschwächungen im wesentlichen in Richtung der magnetischen Feldlinien des in der Flussführungseinheit geführten magnetischen Flusses verlaufen, so dass der magnetische Fluss in der Flussführungseinheit kaum beeinträchtigt wird.

In einer vorteilhaften Ausgestaltung der Erfindung sind die Materialschwächungen ganz oder zum Teil als Sollbruchstellen ausgebildet, so dass bei einem Unfall die Aufprallenergie die Sollbruchstellen beschädigt oder ganz zerstört.

In einer fertigungstechnisch günstigen Ausführung können die Materialschwächungen in der Flussführungseinheit vorgesehene Nuten sein. Weiter können betriebstechnisch günstig die Materialschwächungen auf unterschiedlichen Flachseiten der Flussführungseinheit vorgesehen sein, um eine Deformierung der Flussführungseinheit in eine Vorzugsrichtung zu verringern.

Bevorzugt können die Materialschwächungen in einer zur Längsrichtung des Fahrzeugs parallelen Ebene der Flussführungseinheit schräg, bevorzugt schräg zur Ebene verlaufen. Hierdurch stoßen bei einem Unfall auseinander gebrochene Teile der Flussführungseinheit nicht mit ihren Stoßkanten aufeinander und übertragen hierüber die Aufprallenergie, sondern die auseinander gebrochene Teile der Flussführungseinheit verschieben sich aus der Ebene gegeneinander, bewegen sich also aneinander vorbei.

Bevorzugt können die Materialschwächungen teilweise oder vollständige Unterbrechungen der Flussführungseinheit sein. In einer günstigen Ausführung können die Unterbrechungen teilweise oder ganz mit einem Kleber und/oder Fugenmaterial ausgefüllt sein, so dass sie in ihrer Position zueinander fixiert sind. Dabei können der Kleber und/oder das Fugenmaterial ferromagnetische oder ferrimagnetische Eigenschaften aufweisen, um trotz der Unterbrechungen eine gute magnetische Leitfähigkeit und somit gute Flussführung in der Flussführungseinheit bereitzustellen.

Ein eingangs genanntes Elektrofahrzeug ist erfindungsgemäß dadurch gekennzeichnet, dass die Spuleneinheit wie oben und nachstehend beschrieben ausgebildet ist.

Nachfolgend werden Ausführungsbeispiele der Erfindung detailliert anhand der beigefügten Zeichnungen beschrieben. Diese zeigen
- **Fig. 1**: eine seitliche Schnittansicht einer induktiven Energieübertragungsvorrichtung mit einer ersten Ausführung einer erfindungsgemäßen Spuleneinheit;
- **Fig. 2**: eine schematische Draufsicht auf die Spuleneinheit aus Fig. 1;
- **Fig. 3**: eine seitliche Schnittansicht einer zweiten erfindungsgemäßen Spuleneinheit;
- **Fig. 4**: eine seitliche Schnittansicht einer dritten erfindungsgemäßen Spuleneinheit;
- **Fig. 5**: eine seitliche Schnittansicht der Spuleneinheit aus Fig. 4 in zerstörten Zustand;
- **Fig. 6**: eine seitliche Schnittansicht einer vierten erfindungsgemäßen Spuleneinheit.
- **Fig. 7 a-c**: schematische Draufsichten auf weitere erfindungsgemäße Spuleneinheiten mit kreisscheibenförmiger Flussführungseinheit;
- **Fig. 8 a-c**: schematische Draufsichten auf weitere erfindungsgemäße Spuleneinheiten mit quadratischer Flussführungseinheit.

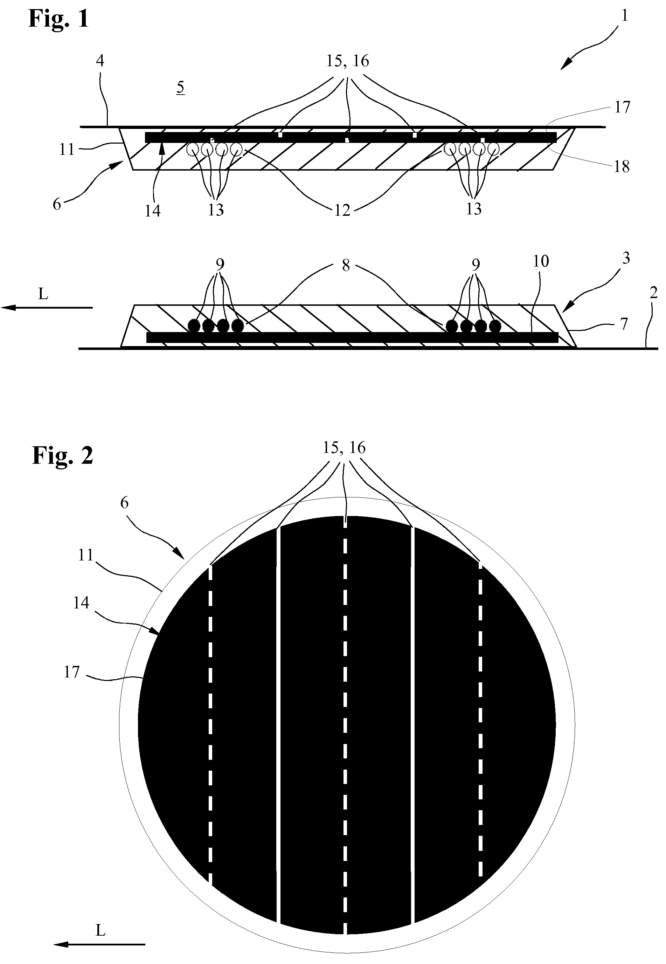

Fig. 1 zeigt schematisch eine seitliche Schnittansicht einer Energieübertragungsvorrichtung 1 zur induktiven Übertragung elektrischer Energie zwischen einer an sich bekannten an einem Fahrbahnboden 2 installierten Primärspuleneinheit 3 und einer an einem Fahrzeugboden 4 eines Elektrofahrzeugs 5 angebrachten erfindungsgemäßen Sekundärspuleneinheit 6. Die Längsrichtung und Vorwärtsfahrtrichtung des Elektrofahrzeugs 5 ist in Fig. 1 mit einem Pfeil L gekennzeichnet.

Die Primärspuleneinheit 3 umfasst dabei in an sich bekannter Weise ein Primärspulen-Gehäuse 7 mit darin angeordneter Primärspule 8 mit Primärspulenwicklungen 9 und einer Primärspulen-Flussführungseinheit 10.

Die Sekundärspuleneinheit 6, im weiteren auch nur als Spuleneinheit 6 bezeichnet, weist in an sich bekannter Weise eine Gehäuse 11 mit darin integrierter Spule 12 mit Spulenwicklungen 13 auf. Um eine möglichst gute Führung des magnetischen Flusses für die induktive Energieübertragung zu erreichen, weist die Spuleneinheit 6 eine ebenfalls in das Gehäuse 11 integrierte erfindungsgemäße Flussführungseinheit in Form einer kreisrunden Ferritplatte 14 auf. Da das magnetisch gut leitende Material der Ferritplatte 14 recht schwer ist, bildet die Ferritplatte 14 einen massiven und starren Gegenstand. Da die Spuleneinheit 6 im wesentlichen flächenparallel zum Fahrzeugboden 4 angeordnet ist und aufgrund ihres großen Gewichts eine große Trägheit aufweist, besteht z.B. bei einem Auffahrunfall die Gefahr, dass die Ferritplatte 14 in Richtung der Aufprallstelle geschleudert wird und dabei die Spuleneinheit 6 zerstört und ggf. aus ihrer Verankerung am Fahrzeugboden 4 reist. Da die Ferritplatte 14 auch sehr starr ist, überträgt sie bei einem Aufprall die Aufprallenergie auch in ihrer Längsrichtung L mehr oder weniger unvermindert.

Gerade beim Einsatz der Spuleneinheit 6 in Elektrofahrzeugen müssen deshalb Vorkehrungen getroffen werden, dass die Ferritplatte 14 bei einem Unfall, insbesondere einem Aufprallunfall möglichst keinen oder nur geringen Schäden anrichtet und Aufprallenergie möglichst nicht unvermindert weiterleitet, sondern möglichst viel Aufprallenergie absorbiert

Hierzu sieht die Erfindung vor, dass die Ferritplatte 14 Materialschwächungen aufweist, welche insbesondere bei einem Aufprallunfall dafür sorgen, dass die Ferritplatte 14 gezielt bricht, wodurch Aufprallenergie absorbiert wird, und/oder sich Teile der Ferritplatte 14 so gegeneinander verschieben können, dass die Aufprallenergie nicht direkt weitergeleitet wird, sondern der Energiefluss unterbrochen wird.

Bei der in Fig. 1 und 2 gezeigten Ausführung der Erfindung weist die Ferritplatte 14 als Materialschwächungen im wesentlichen quer zur Längsrichtung L verlaufenden Nuten 15 auf. Die Nuten 15 bzw. die dort verbleibenden Stege 16 der Ferritplatte 17 dienen insbesondere bei einem Aufprall als Sollbruchstellen, an denen die Ferritplatte 14 definiert bricht. In einer bevorzugten Ausführung können, wie in Fig. 1 und 2 gezeigt, die Nuten 15 auf unterschiedlichen Flachseiten 17, 18 der Ferritplatte 14 angeordnet sein, so dass die Ferritplatte 14 bei einen Aufprall leicht bricht, da die frontal eingetragene Aufprallenergie jeweils schräg über die Stege 16 geleitet wird, wobei ein in Längsrichtung L verlaufender Anteil der Aufprallenergie dann zum zick-zack-förmigen Brechen der Ferritplatte 14 führt. Hierdurch wird nicht nur die direkte Weiterleitung der Aufprallenergie verringert, sondern die einzelnen zerbrochenen Teile der Ferritplatte weichen dann seitlich aus.

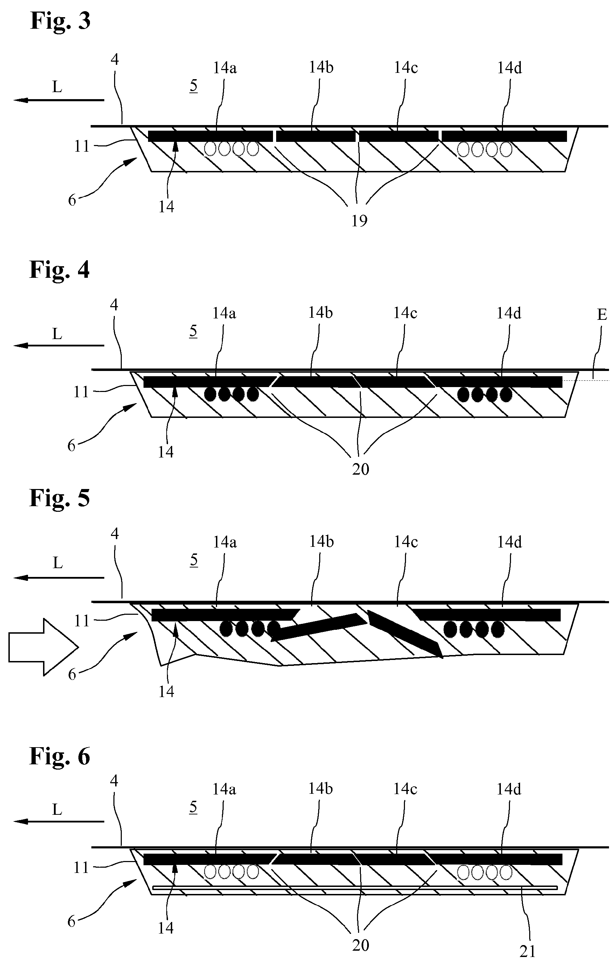

In einer in Fig. 3 gezeigten Ausführung der Erfindung weist die Ferritplatte 14 quer zur Längsrichtung L verlaufende Unterbrechungen 19 auf, ist also vorliegend in vier Plattenteile 14a-d unterteilt. Um die durch die Unterbrechungen 19 hervorgerufenen Nachteile für die magnetische Flussführung durch den dadurch erzeugten Materialunterbruch bzw. sogar Luftspalt zu verringern, kann vorteilhaft vorgesehen werden, dass Stoßstellen zwischen benachbarten Teilelementen 14a-d sehr schmal sind, die Stoßstellen also beispielsweise mit einer mechanischen Haltevorrichtung aneinander gedrückt werden. Alternativ kann vorteilhaft durch Vergießen der während des Gießvorgangs bevorzugt aneinander gepressten Plattenteile 14a-d im Gehäuse 11 auch ein magnetisch gut leitende Verbindung erreicht und ein hoher magnetischer Widerstand, insbesondere ein Luftspalt verhindert werden.

Alternativ oder zusätzlich können die Unterbrechungen 19 vorteilhaft auch mit einem Kleber oder Fugenmaterial ausgefüllt werden, welches bevorzugt elastisch ist und bei einem Aufprall leicht zerstört werden kann, beispielsweise Gummi oder ein weichelastischer Kunststoff. Bevorzugt kann der Kleber bzw. das Fugenmaterial magnetisch gut leitend sein, beispielsweise durch Hinzufügen eines magnetisch gut leitenden Zusatzstoffes wie z.B. Ferritpulver. In einer günstigen Fortbildung der Erfindung kann der Kleber bzw. das Fugenmaterial elektrisch schlecht leitend sein, um evtl. auftretenden Wirbelströme in der Ferritplatte 14 zu verringern oder ganz zu verhindern.

Um das gewünschte Bruchverhalten der Ferritplatte 14 weiter zu verbessern, sieht die in Figuren 4 und 5 gezeigte Ausführung der Erfindung vor, dass anstelle der senkrecht zur Ebene E der Ferritplatte 14 verlaufenden Unterbrechungen 19 aus Fig. 3 in Längsrichtung L schräg zur Ebene E verlaufenden Schräg-Unterbrechungen 20 vorgesehen sind. Diese Schräg-Unterbrechungen 20 können auch so ausgebildet sein, dass sie die Ferritplatte 14 nicht in einzelne Teilelement 14a-d aufteilen, sondern dass die Ferritplatte 14 an den Schräg-Unterbrechungen 20 auch noch über Stege ähnlich der in Fig. 1 gezeigten Ausführung teils oder vollständig verbunden bleibt.

Bevorzugt sind die Schräg-Unterbrechungen 20 so abgeschrägt, dass bei einem in Fig. 6 mit dem großen Pfeil angedeuteten Aufprall von in Fig. 6 links die zentrumsnäheren, inneren Plattenteile 14b und 14c zur Fahrbahn 2 und vom Fahrzeugboden 4 weg gleiten, wenn sie von der vordersten Plattenteil 14a und ggf. dem hintersten Plattenteil 14d zusammengeschoben werden. Dies stellt sicher, dass bei einem Unfall die Ferritplatte 14 bzw. eines oder mehrere ihrer Plattenteile 14a-d möglichst nicht zum Elektrofahrzeug 5 hin und im schlimmsten Fall in dessen Fahrgastraum geschoben werden.

In einer weiteren vorteilhaften Ausgestaltung der Erfindung nach Fig. 6 kann auch vorgesehen werden, in das Gehäuse 11 ein Schutzelement 21 einzuarbeiten, welches zusätzlich verhindert, dass im Zerstörungsfall die Ferritplatte 14 oder deren Plattenteile 14a-d auch nicht aus dem Gehäuse 11 zur Außenseite des Fahrzeugs 5 hin gelangen können, um den Außenbereich des Fahrzeugs nicht zu gefährden. Bevorzugt kann das Schutzelement 21 aus einem Material hergestellt sein, welches die magnetischen und/oder elektrischen Eigenschaften der Spuleneinheit 6 nicht beeinträchtigt, beispielsweise ein bevorzugt flächiges Kevlar- oder Aramid-Gewebe oder -Papier.

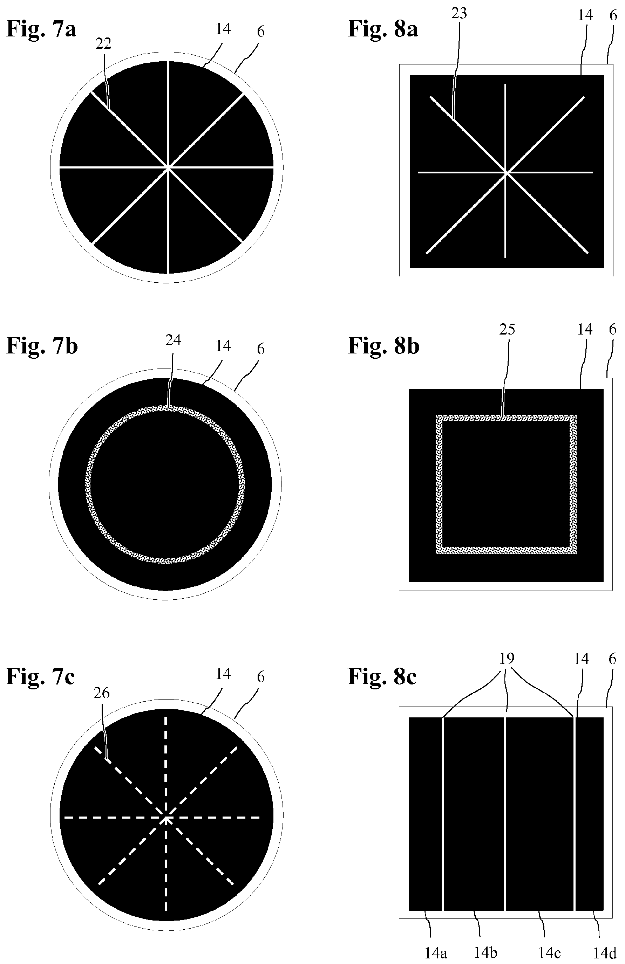

In Fig. 7a-c und 8a-c sind schematische Draufsichten auf weitere erfindungsgemäße Spuleneinheiten mit kreisscheibenförmiger bzw. quadratischer Ferritplatte 14 gezeigt, wobei die Erfindung auch bei anderen Geometrien, z.B. rechteckig, achteckig, polygonal etc. verwirklicht werden kann. Bei diesen Zeichnungen wird davon ausgegangen, dass die Vorwärtsfahrtrichtung und Längsrichtung L des Elektrofahrzeugs 5 nach links zeigt, wie in Fig. 1 definiert.

Bei den Ausführungen nach Fig. 7a und 8a verlaufen Materialschwächungen 22 bzw. 23 strahlenförmig vom Zentrum der Ferritplatte 14 nach außen, wobei die Materialschwächungen 22 die Ferritplatte 14 vollständig unterbrechen, auch in ihrer Dicke, während die Materialschwächungen 23 nicht bis zum Umfang der Ferritplatte 14 reichen. Bei diesen Ausführungen verlaufen die Materialschwächungen 22, 23 im wesentlichen in der Hauptrichtung des magnetischen Flusses, der bei der in Fig. 7a gezeigten Ausführung durch spiralförmig auf der Ferritplatte 14 angeordnete, nicht gezeigte Spulenwicklungen 13 und bei der in Fig. 8a gezeigten Ausführung durch im Quadrat spiralförmig angeordnete, nicht gezeigte Spulenwicklungen 13 erzeugt wird.

Bei den Ausführungen nach Fig. 7b und 8b verlaufen Materialschwächungen 24 bzw. 25 kreisringförmig bzw. karreförmig, unterbrechen also die Hauptrichtung des magnetischen Flusses. Sind die Materialschwächungen 24 bzw. 25, wie in Fig. 7b und 8b angedeutet, vollständige Unterbrechungen der Ferritplatte 14, so können diese mit einem oben zu Fig. 3 beschriebenen Kleber oder Fugenmaterial ausgefüllt werden, um ihren magnetischen Widerstand zu verringern. Hierdurch kann das Bruchverhalten der Ferritplatte 14 bei einem schrägen oder seitlichen Auffahrunfall verbessert werden, so dass die Ferritplatte 14 möglichst in Querrichtung zu dem Aufprallstoß bricht.

Bei der Ausführung der Erfindung nach Fig. 7c verlaufen Materialschwächungen 26 strahlenförmig und nicht ganz bis zum Umfang der Ferritplatte 14 ähnlich zu der in Fig. 8a gezeigten Ausführung, wobei in Fig. 7c die Materialschwächungen 26 die Ferritplatte 14 nur linienweise unterbrechen.

Eine in Fig. 8c gezeigte Ausführung der Erfindung entspricht der in Fig. 3 gezeigten Ausführung mit dem Unterschied, dass die Ferritplatte 14 hier quadratisch und nicht rund ist.

Anstelle der oben beschriebenen und in den Figuren gezeigten Materialschwächungen in Form von Nuten oder vollständigen Unterbrechungen können die Materialschwächungen auch anders ausgeführt werden, beispielsweise durch ganz oder teilweise durch die Dicke der Ferritplatte 14 reichende Löcher, Stanzungen oder Prägungen. Auch können die Materialschwächungen vorteilhaft durch absichtlich verursachte Inhomogenitäten des die Ferritplatte 14 bildenden Materials bereitgestellt werden, so dass beispielsweise die Dicke der Ferritplatte 14 gleich bleibt, an den Stellen der gewünschten Materialschwächungen aber die Dichte des Materials verringert wird. Auch lassen sich die unterschiedlichen Arten der Materialschwächungen miteinander kombinieren.

### Bezugszeichenliste

- 1: Energieübertragungsvorrichtung
- 2: Fahrbahnboden
- 3: Primärspuleneinheit
- 4: Boden des Elektrofahrzeugs
- 5: Elektrofahrzeug
- 6: Sekundärspuleneinheit
- 7: Primärspulen-Gehäuse
- 8: Primärspule
- 9: Primärspulenwicklungen der Primärspule
- 10: Flussführungseinheit der Primärspuleneinheit
- 11: Gehäuse der Sekundärspule
- 12: Sekundärspule
- 13: Spulenwicklungen der Sekundärspuleneinheit
- 14: Ferritplatte als Flussführungseinheit der Sekundärspuleneinheit
- 15: Nuten
- 16: Stege
- 17: obere, innere Flachseite
- 18: untere, äußere Flachseite
- 19: Unterbrechungen
- 20: Schräg-Unterbrechungen
- 21: Schutzelement
- 22: strahlenförmige Materialschwächungen
- 23: strahlenförmige Materialschwächungen
- 24: kreisringförmige Materialschwächungen
- 25: karreförmige Materialschwächungen
- 26: strahlenförmige, linienweise Materialschwächungen

## Patentansprüche

1. Spuleneinheit (6) für ein Elektrofahrzeug (5) zur induktiven Übertragung elektrischer Energie zwischen der Spuleneinheit (6) und einer ortsfesten Ladestation, wobei die Spuleneinheit (6) mindestens eine Spule (12) und eine Flussführungseinheit (14) zur Führung eines im Betrieb der Spule (12) auftretenden magnetischen Flusses aufweist, **dadurch gekennzeichnet, dass** die Flussführungseinheit (14) Materialschwächungen (15; 19; 20; 22-26) aufweist, wobei die Materialschwächungen (15; 19; 20; 22-26) ganz oder zum Teil als Sollbruchstellen ausgebildet sind.

2. Spuleneinheit (6) nach Anspruch 1, **dadurch gekennzeichnet, dass** die Materialschwächungen (15; 19; 20; 22-26) im wesentlichen quer zur Längsrichtung (L) des Fahrzeugs (5) verlaufen.

3. Spuleneinheit (6) nach Anspruch 1, **dadurch gekennzeichnet, dass** die Materialschwächungen (24; 25) im wesentlichen konzentrisch zu einem Zentrum der Flussführungseinheit (14) verlaufen.

4. Spuleneinheit (6) nach einem der voranstehenden Ansprüche, **dadurch gekennzeichnet, dass** die Materialschwächungen (22; 23; 26) im wesentlichen in Richtung der magnetischen Feldlinien des in der Flussführungseinheit (14) geführten magnetischen Flusses verlaufen.

5. Spuleneinheit (6) nach einem der voranstehenden Ansprüche, **dadurch gekennzeichnet, dass** die Materialschwächungen in der Flussführungseinheit (14) vorgesehene Nuten (15) sind.

6. Spuleneinheit (6) nach einem der voranstehenden Ansprüche, **dadurch gekennzeichnet, dass** die Materialschwächungen (15) auf unterschiedlichen Flachseiten (17, 18) der Flussführungseinheit (14) vorgesehen sind.

7. Spuleneinheit (6) nach einem der voranstehenden Ansprüche, **dadurch gekennzeichnet, dass** die Materialschwächungen (15) abwechselnd auf den unterschiedlichen Flachseiten (17, 18) der Flussführungseinheit (14) vorgesehen sind.

8. Spuleneinheit (6) nach einem der voranstehenden Ansprüche, **dadurch gekennzeichnet, dass** die Materialschwächungen (20) in einer zur Längsrichtung (L) des Fahrzeugs (5) parallelen Ebene (E) der Flussführungseinheit (14) schräg, bevorzugt schräg zur Ebene (E) verlaufen.

9. Spuleneinheit (6) nach einem der voranstehenden Ansprüche, **dadurch gekennzeichnet, dass** die Materialschwächungen (15; 19; 20; 22-26) teilweise oder vollständige Unterbrechungen der Flussführungseinheit (14) sind.

10. Spuleneinheit (6) nach Anspruch 8 oder 9, **dadurch gekennzeichnet, dass** die Unterbrechungen (24; 25) teilweise oder ganz mit einem Kleber und/oder Fugenmaterial ausgefüllt sind.

11. Spuleneinheit (6) nach Anspruch 10, **dadurch gekennzeichnet, dass** der Kleber und/oder das Fugenmaterial ferromagnetische oder ferrimagnetische Eigenschaften aufweist.

12. Elektrofahrzeug (5) mit einer Spuleneinheit (6) zur induktiven Übertragung elektrischer Energie zwischen einer Sekundärspule (12) der Spuleneinheit (6) und einer Primärspule (8) einer Ladestation, **dadurch gekennzeichnet, dass** die Spuleneinheit (6) nach einem der voranstehenden Ansprüche ausgebildet ist.

## Claims

1. Coil unit (6) for an electric vehicle (5) for inductive transmission of electrical energy between the coil unit (6) and a stationary charging station, wherein the coil unit (6) comprises at least one coil (12) and a flux guide unit (14) for guidance of a magnetic flux which is produced when the coil (12) is in operation, **characterised in that** the flux guide unit (14) has material weaknesses (15; 19; 20; 22-26), wherein the material weaknesses (15; 19; 20; 22-26) are formed wholly or in part as predetermined breaking points.

2. Coil unit (6) according to claim 1, **characterised in that** the material weaknesses (15; 19; 20; 22-26) run essentially transversely in relation to the longitudinal direction (L) of the vehicle (5).

3. Coil unit (6) according to claim 1, **characterised in that** the material weaknesses (24; 25) run essentially concentrically with a centre of the flux guide unit (14).

4. Coil unit (6) according to one of the preceding claims, **characterised in that** the material weaknesses (22; 23; 26) run essentially in the direction of the magnetic field lines of the magnetic flux guided in the flux guide unit (14).

5. Coil unit (6) according to one of the preceding claims, **characterised in that** the material weaknesses are grooves (15) provided in the flux guide unit (14).

6. Coil unit (6) according to one of the preceding claims, **characterised in that** the material weaknesses (15) are provided on different flat sides (17, 18) of the flux guide unit (14).

7. Coil unit (6) according to one of the preceding claims, **characterised in that** the material weaknesses (15) are provided alternately on the different flat sides (17, 18) of the flux guide unit (14).

8. Coil unit (6) according to one of the preceding claims, **characterised in that** the material weaknesses (20) run in a plane (E) of the flux guide unit (14) parallel to the longitudinal direction (L) of the vehicle (5) at an oblique angle, preferably at an oblique angle in relation to the plane (E).

9. Coil unit (6) according to one of the preceding claims, **characterised in that** the material weaknesses (15; 19; 20; 22-26) are partial or complete breaks in the flux guide unit (14).

10. Coil unit (6) according to claim 8 or 9, **characterised in that** the breaks (24; 25) are partially or wholly filled with an adhesive and/or jointing material.

11. Coil unit (6) according to claim 10, **characterised in that** the adhesive and/or the jointing material has ferromagnetic or ferrimagnetic properties.

12. Electric vehicle (5) with a coil unit (6) for inductive transmission of electrical energy between a secondary coil (12) of the coil unit (6) and a primary coil (8) of a charging station, **characterised in that** the coil unit (6) is constructed according to one of the preceding claims.

## Revendications

1. Unité bobine (6) pour un véhicule électrique (5) pour la transmission inductive d'énergie électrique entre l'unité bobine (6) et un poste de charge fixe, l'unité bobine (6) présentant au moins une bobine (12) et une unité de guidage de flux (14) pour le guidage d'un flux magnétique survenant en fonctionnement de la bobine (12), **caractérisée en ce que** l'unité de guidage de flux (14) présente des affaiblissements de matériau (15 ; 19 ; 20 ; 22-26), les affaiblissements de matériau (15 ; 19 ; 20 ; 22-26) étant réalisés entièrement ou en partie sous forme de points destinés à la rupture.

2. Unité bobine (6) selon la revendication 1, **caractérisée en ce que** les affaiblissements de matériau (15 ; 19 ; 20 ; 22-26) s'étendent sensiblement transversalement au sens longitudinal (L) du véhicule (5).

3. Unité bobine (6) selon la revendication 1, **caractérisée en ce que** les affaiblissements de matériau (24 ; 25) s'étendent sensiblement concentriquement à un centre de l'unité de guidage de flux (14).

4. Unité bobine (6) selon l'une quelconque des revendications précédentes, **caractérisée en ce que** les affaiblissements de matériau (22 ; 23 ; 26) s'étendent sensiblement en direction des lignes de champs magnétiques du flux magnétique guidé dans l'unité de guidage de flux (14).

5. Unité bobine (6) selon l'une quelconque des revendications précédentes, **caractérisée en ce que** les affaiblissements de matériau sont des rainures (15) prévues dans l'unité de guidage de flux (14).

6. Unité bobine (6) selon l'une quelconque des revendications précédentes, **caractérisée en ce que** les affaiblissements de matériau (15) sont prévus sur différents côtés plats (17, 18) de l'unité de guidage de flux (14).

7. Unité bobine (6) selon l'une quelconque des revendications précédentes, **caractérisée en ce que** les affaiblissements de matériau (15) sont prévus alternativement sur les différents côtés plats (17, 18) de l'unité de guidage de flux (14).

8. Unité bobine (6) selon l'une quelconque des revendications précédentes, **caractérisée en ce que** les affaiblissements de matériau (20) s'étendent dans un plan (E) parallèle au sens longitudinal (L) du véhicule (5) de l'unité de guidage de flux (14) en biais, de préférence en biais par rapport au plan (E).

9. Unité bobine (6) selon l'une quelconque des revendications précédentes, **caractérisée en ce que** les affaiblissements de matériau (15 ; 19 ; 20 ; 22-26) sont des interruptions partielles ou complètes de l'unité de guidage de flux (14).

10. Unité bobine (6) selon la revendication 8 ou 9, **caractérisée en ce que** les interruptions (24 ; 25) sont remplies en partie ou entièrement d'une colle et/ou d'un matériau de joint.

11. Unité bobine (6) selon la revendication 10, **caractérisée en ce que** la colle et/ou le matériau de joint présentent des propriétés ferromagnétiques ou ferrimagnétiques.

12. Véhicule électrique (5) avec une unité bobine (6) pour la transmission inductive d'énergie électrique entre une bobine secondaire (12) de l'unité bobine (6) et une bobine primaire (8) d'un poste de charge, **caractérisé en ce que** l'unité bobine (6) est réalisée selon l'une quelconque des revendications précédentes.
